(19) Europäisches Patentamt

European Patent Office

Office européen des brevets

(11) Veröffentlichungsnummer : **0 047 422**
B1

(12) **EUROPÄISCHE PATENTSCHRIFT**

(45) Veröffentlichungstag der Patentschrift :
04.07.84

(21) Anmeldenummer : 81106561.4

(22) Anmeldetag : 24.08.81

(51) Int. Cl.³ : **G 21 C   3/34**

(54) **Richtwerkzeug für Abstandshalter von Kernreaktorbrennelementen.**

(30) Priorität : **04.09.80 DE 3033349**

(43) Veröffentlichungstag der Anmeldung :
**17.03.82 Patentblatt 82/11**

(45) Bekanntmachung des Hinweises auf die Patenterteilung : **04.07.84 Patentblatt 84/27**

(84) Benannte Vertragsstaaten :
**CH DE FR LI SE**

(56) Entgegenhaltungen :
**DE-A- 1 589 051**
**DE-A- 2 749 998**
**FR-A- 2 420 826**
**US-A- 3 892 027**

(73) Patentinhaber : **KRAFTWERK UNION AKTIENGE-
SELLSCHAFT**
**Wiesenstrasse 35**
**D-4330 Mülheim (Ruhr) (DE)**

(72) Erfinder : **Knecht, Klaus**
**Lachnerstrasse 40**
**D-8520 Erlangen (DE)**
Erfinder : **Gebhard, Georg**
**Walburgastrasse 16**
**D-8520 Erlangen (DE)**
Erfinder : **Rohr, Franz**
**Lange Zeile 64**
**D-8520 Erlangen (DE)**

(74) Vertreter : **Mehl, Ernst, Dipl.-Ing. et al**
**Postfach 22 01 76**
**D-8000 München 22 (DE)**

## Beschreibung

Die vorliegende Erfindung betrifft ein Richtwerkzeug für die fernbediente Rekalibrierung der federnden Anlagenoppen, kurz Anlagefedern genannt, in den quadratischen Maschen der Abstandshaltergitter von Kernreaktorbrennelementen. Die Abstandshaltergitter haben bekanntlich die Aufgabe, die Vielzahl von Brennstäben eines Brennelementes stets auf genauem gegenseitigen Abstand zu halten und dabei die Halterung konstruktiv so zu gestalten, daß eine Schwingungsanregung der Brennstäbe durch das Vorbeiströmen des Kühlmittels praktisch verhindert wird. Eine solche Abstandshalterkonstruktion ist beispielsweise in der deutschen Offenlegungsschrift 15 89 051 beschrieben, aus dieser geht auch das Grundprinzip der sogenannten Dreipunkthalterung klar und eindeutig hervor.

Bei dieser Dreipunkthalterung liegt der Brennstab in axialer Richtung an übereinander angeordneten festen Anlagenoppen an und wird durch eine federnde Anlagenoppe gegen diese gedrückt.

Für eine sichere Einspannung ist eine definierte Federkraft erforderlich. Diese kann durch mechanische Beschädigungen oder durch andere Einflüsse soweit herabgesetzt werden, daß der Brennstab unzureichend gehalten wird, was dann unter Umständen zur Beschädigung des Brennstabes führt.

Ein Brennelement, bei dem einzelne Anlagefedern verbogen sind, kann nur dann weiter betrieben werden, wenn der durch diese Elemente gehalterte Brennstab entfernt und durch einen Vollstab, der also keinen Kernbrennstoff enthält, ersetzt wird.

Eine andere Möglichkeit wäre die, die beschädigte Anlagefeder wieder in die ursprüngliche Lage zu bringen, so daß damit wieder eine einwandfreie Halterung des bisher eingesetzt gewesenen Brennstabes oder eines neu einzuführenden Brennstabes gewährleistet ist.

Diese Aufgabe wird erfindungsgemäß gelöst durch ein Richtwerkzeug, das aus einem äußeren dem Querschnitt einer Abstandshaltermasche unter Berücksichtigung der in deren Innenraum vorstehenden starren und federnden Anlagenoppen angepaßten Zentrierrohr, mit einem im Bereich der Federnden Anlagenoppen angeordneten Fenster, einem konzentrisch von diesem umfaßten und in axialer Richtung verschiebbaren Zangenbetätigungsrohr sowie einem im Inneren desselben angeordneten gegenüber dem Zentrierrohr in axialer Richtung feststehenden, jedoch in Erstreckungsrichtung der zu rekalibrierenden federnden Anlagenoppe pendelnd angeordneten Pendelstange mit am freien Ende derselben angebrachter Greifzange und einer darüber und oberhalb der federnden Anlagenoppe mit dem Zangenbetätigungsrohr zur radialen Verschiebung der Greifzange gegen den Druck einer Rückstellfeder in Eingriff bringbaren Anlaufschräge besteht. Das Grundprinzip dieses Richtwerkzeuges besteht also darin, daß eine Greifzange die verbogene Abstandshalterfeder faßt und wieder in den Innenraum der Masche zieht. Dieses Richtwerkzeug ist dabei fernbedient, da dieser Vorgang, der vorzugsweise bei bestrahlten Brennelementen evtl. notwendig wird, unter Wasserabschirmung im Brennelementabklingbecken eines Kernkraftwerkes auszuführen ist. Dabei sind am leichtesten zu erreichen jede Abstandshaltergitter, die dem Kopf oder dem Fuß des Brennelementes benachbart sind. Durch entsprechende Verlängerung der aktiven Teile dieses Richtwerkzeuges, also des Verstellmechanismus der Greifzange, ist es ebenso möglich, die weiteren Abstandshaltergitter des Brennelementes zu erreichen. Dabei können die benachbarten Brennstäbe immer an Ort und Stelle belassen bleiben.

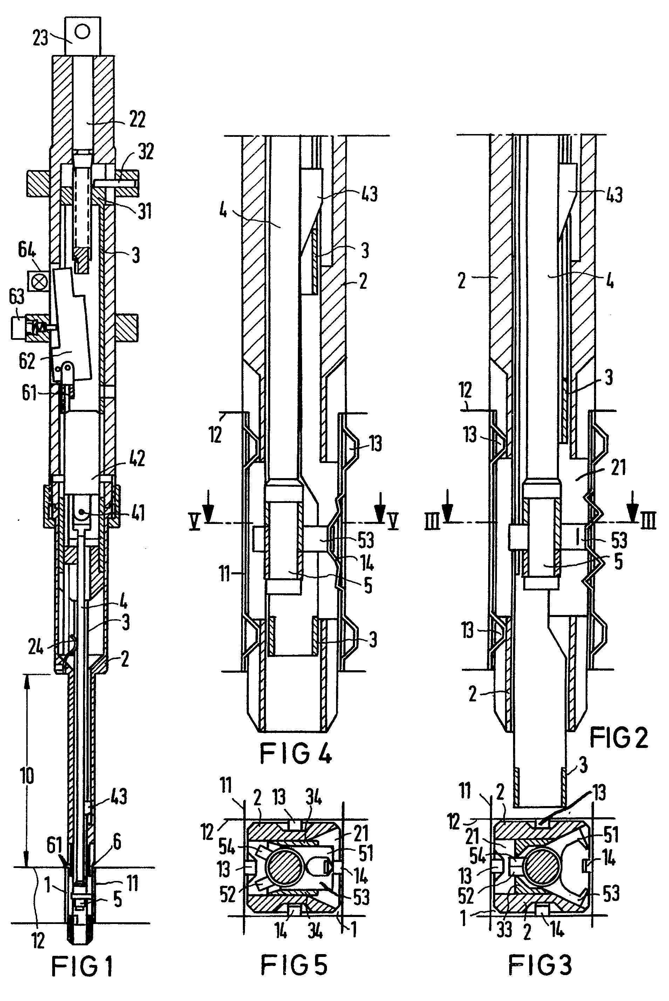

Zur weiteren Erläuterung dieser Erfindung sei ein Ausführungsbeispiel anhand der Fig. 1 bis 5 näher beschrieben. Dieses umfaßt den Betätigungsmechanismus für die Greifzange, die Verlängerung dieses Werkzeuges zum Zwecke der Fernbedienung innerhalb eines Brennelementabklingbeckens wurde weggelassen, sie besteht praktisch lediglich aus einem feststehenden aufgesetzten Rohr und einer darin geführten Welle, die von der Bedienungsseite her entweder nach links oder nach rechts verdreht wird. Zur stets reproduzierbaren genauen Einstellung der Greifzange ist dabei auch ein an sich bekanntes Zählwerk vorgesehen.

Die Fig. 1 zeigt dieses Richtwerkzeug im Schnitt, und zwar im in eine Abstandshaltermasche aufgesetzten Zustand, die Fig. 2 zeigt diese Abstandshaltermasche vergrößert mit starren und federnden Anlagenoppen 13 und 14, wobei die Greifzange 53 geöffnet ist. Die Anlagefeder 14 ist verbogen und nicht mehr geeignet zur Halterung eines Brennstabes.

In der Fig. 4 dagegen ist die Greifzange 53 geschlossen und hat die Anlagefeder 14 wieder in ihre Ausgangsstellung zurückgezogen. Die Fig. 3 und 5 zeigen die Greifzange bzw. das Richtwerkzeug im Querschnitt in Höhe der Greifzange.

Über den Aufbau eines Abstandshaltergitters gibt die eingangs genannte Offenlegungsschrift ausführlich Auskunft, so daß hier lediglich eine Masche dieses Gitters 1 dargestellt ist. Diese Abstandshaltermasche besteht aus den sich kreuzenden Blechstegen 11 und 12, die entsprechend dem erwähnten Stand der Technik mit starren Anlagenoppen 13 und federnden Anlagenoppen, also Anlagefedern 14, ausgerüstet sind.

Das Richtwerkzeug besteht nun aus einem Zentrierrohr 2, das in seinem in das Brennelement eingreifenden Teil 10 dem Querschnitt der Abstandshaltermasche unter Berücksichtigung der in deren Innenraum vorstehenden starren und federnden Anlagenoppen entspricht, siehe dazu auch die Fig. 3 und 5. Dieses Zentrierrohr 2 ist im Bereich gegenüber der auszurichtenden Anlagefeder 14 mit einem quer durchgehenden Fenster 21 versehen und sitzt mit einer Schulter 6 auf den Abstandshalterstegen 11 und 12 auf, damit ist auch die Lage der Greifzange 5, die aus zwei in einer Ebene drehbar gelagerte Greifklauen 51 und 53 besteht, gegenüber der auszurichtenden Anlagefeder 14 festgelegt.

In Anbetracht der großen Länge des Richtwerkzeuges einschließlich seiner nichtdargestellten Verlängerung könnte dieser Sitz durch Verkanten des Werkzeuges ungenau sein, so daß zur Sicherheit ein Anschlagstift 61 vorgesehen ist, der nach Erreichen der Sollage den Bewegungsmechanismus des Richtwerkzeuges freigibt und damit nicht nur dessen Funktion gewährleistet, sondern auch eine evtl. sonst mögliche weitere Beschädigung verhindert. Dazu betätigt dieser Anschlagstift 61 eine Sperrklinke 62, die in der dargestellten Weise aus einer Nut der Gewindespindel 22, die der Verstellung der Greifzange usw. dient, ausschwenkt. Die Sperrstellung dieser Klinke 62 wird durch die Rückstellfeder 63 bewirkt, die Öffnungsstellung wird über einen Überwachungsschalter 64 optisch oder akustisch auf die Bedienungsseite oberhalb des Wasserspiegels des Brennelementabklingbeckens gemeldet. Dieser Überwachungsschalter kann beispielsweise ein berührungsloser, nach dem Induktionsprinzip wirkender Schalter sein.

Innerhalb dieses Zentrierrohres 2 sind die aktiven Teile dieses Richtwerkzeuges angeordnet, diese bestehen zunächst aus der Pendelstange 4 mit der am freien Ende derselben angebrachten Greifzange 5 sowie aus dem in axialer Richtung verschiebbaren Zangenbetätigungsrohr 3. Die Pendelstange 4 ist am Befestigungsstück 42, das mit dem Zentrierrohr 2 fest verbunden ist, drehbar gelagert (41). Dieses Gelenk 41 ist dabei so angebracht, daß die Pendelstange 4 und damit auch die Greifzange 5 senkrecht zur die Anlagefeder 14 tragenden Maschenwand bewegbar ist. Die Normallage beim Einsetzen des Werkzeuges, also bei geöffneter Greifzange, siehe Fig. 3, wird durch die Rückstellfeder 24 gewährleistet.

Zur Bewegung dieser Pendelstange 4 sowie der Greifzange 5 ist das Zangenbetätigungsrohr 3 vorgesehen, das die Pendelstange 4 mit Abstand umgibt. Dieses Rohr wird durch die bereits erwähnte Gewindespindel 22 durch Drehung derselben auf und abbewegt, es ist zu diesem Zweck mit einer Gewindemutter 31 abgeschlossen und durch seine im Bereich des Abstandshaltergitters im wesentlichen rechteckige Form verdrehungssicher im Zentrierrohr 2 gelagert. Während in Fig. 1 die oberste Stellung dieses Zangenbetätigungsrohres 3 dargestellt ist, dazu ist ein einstellbarer Anschlag 32 vorgesehen, zeigt die Fig. 2 die unterste Stellung derselben, wie sie beim Einsatz des Werkzeuges der Abstandshaltergittermasche notwendig ist. Aus den Fig. 2 und 3 ist ersichtlich, daß das Zangenbetätigungsrohr 3 in diesem Bereich geschlitzt ist und durch die Form dieser Schlitzung Anlaufflächen geschaffen sind, die die Greifzange 5 in der geöffneten Stellung halten.

Die Greifzange 5 selbst besteht aus den beiden Zangenklauen 51 und 53, die auf der anderen Seite des Drehpunktes auf der Pendelstange 4 in rückwärtige Zangenfortsätze 52 und 54 übergehen. Durch die Form des Zangenbetätigungsrohres 3 werden diese Zangenfortsätze 52 und 54 zusammengedrückt, so daß die geöffnete Stellung gemäß Fig. 3 erzwungen wird.

Am oberen Ende des Richtwerkzeugs ist eine Kupplung 23 für eine entsprechende Verlängerung mit einem Handrad sowie einem Umdrehungszähler auf ihrer Bedienungsseite angeordnet. Der Funktionsablauf mit diesem Werkzeug ist folgender:

Wenn das Werkzeug auf die Gittermasche aufgesetzt ist, wird die Sperrklinke 62 aus der Nut der Gewindespindel 22 ausgeschwenkt, so daß durch Drehung derselben über die Kupplung 3 und das nichtdargestellte Fernbetätigungsgestänge das Zangenbetätigungsrohr 3 nach oben gezogen wird. Durch die Änderung des Querschnittes bzw. der Anlauffläche 33, 34 dieses Zangenbetätigungsrohres 3, siehe Fig. 5, werden die Klauen 51 und 53 zusammengedrückt und fassen die deformierte Abstandshalterfeder 14. Die rückwärtigen Zangenfortsätze 52 und 54 sind dabei frei. Durch weiteres Anheben über die Drehung der Gewindespindel 22 des Zangenbetätigungsrohres 3 kommt dieses mit einer Anlaufschräge 43 an der Pendelstange 4, die durch einen Schlitz im Zangenbetätigungsrohr 3 hindurchragt, in Eingriff, siehe Fig. 4, und drückt die Pendelstange 4 einschließlich der geschlossenen Greifzange aus ihrer Anfangsstellung weg und zieht damit die gefaßte Feder 14 in die Normallage.

Nach Beendigung dieses Vorganges wird die Spindel 22 nach der anderen Seite verdreht, während sich das Zangenbetätigungsrohr 3 absenkt, die Rückstellfeder 24 drückt die Pendelstange 4 in die Ausgangsstellung zurück, anschließend öffnet sich die Zange 5 dadurch, daß die Anlaufflächen des Zangenbetätigungsrohres 3 wieder mit den rückwärtigen Zangenfortsätzen 52 und 54 in Eingriff kommen bis schließlich die Stellung nach Fig. 3 wieder erreicht ist.

An dem bereits erwähnten Zahlwerk für die Betätigung der Gewindespindel 22 ist diese Lage des Zangenbetätigungsrohres 3 erkennbar, das Richtwerkzeug kann ohne Schwierigkeiten wieder aus der Abstandshaltermasche zurückgezogen werden, wobei der Anschlagstift 61 die Sperrklinke 62 wieder freigibt und diese mit Hilfe der Feder 63 wieder in die Nut der Gewindespindel 22 einrastet und somit eine Verschiebung des Zangenbetätigungsrohres von außen verhindert. Erst nach erneutem Aufsetzen auf eine Abstandshaltermasche löst sich diese Verriegelung und das Werkzeug kann in seinem aktiven Teil wieder betätigt werden.

Durch den über das Betätigungsrohr 3 erzwungenen Ablauf der einzelnen Betätigungsschritte ist die Reihenfolge der Schritte zur Zangenbewegung und damit Ausrichtung der Anlagefeder 14 sichergestellt und eine Fehlbedienung ausgeschlossen.

Abschließend sei erwähnt, daß dieses Richtwerkzeug mit größter Präzision gefertigt sein muß, da die Weite einer Abstandshaltermasche in der Größenordnung von 15 mm liegt und die Gesamtlänge des Werkzeuges bis zur Wasseroberfläche des Abklingbeckenwassers, als zur Bedienungsseite in der Größenordnung von 10 m liegt. Selbstverständlich erlaubt das hier dargestellte Erfindungsprinzip auch konstruktive Abweichungen von dem hier dargestellten Ausführungsbeispiel, was insbesondere auch für das nichtdargestellte Verlängerungsstück zur Fernbedienung gilt. Der zwangsläufige Ablauf der Bewegungsschritte bleibt jedoch in allen Fällen erhalten. Außerdem ist zu erwähnen, daß nach diesem Prinzip auch die Anlagefedern anderer Abstandshalterkonstruktionen wieder ausgerichtet werden können.

**Ansprüche**

1. Richtwerkzeug für die fernbediente Rekalibrierung der federnden Anlagenoppen, kurz Anlagefedern genannt, in den quadratischen Maschen der Abstandshaltergitter von Kernreaktorbrennelementen, dadurch gekennzeichnet, daß es aus einem äußeren dem Querschnitt einer Abstandshaltermasche unter Berücksichtigung der in deren Innenraum vorstehenden starren und federnden Anlagenoppen angepaßten Zentrierrohr (2), mit einem im Bereich der Federnden Anlagenoppen (14) angeordneten Fenster (21), einem konzentrisch von diesem umfaßten und in axialer Richtung verschiebbaren Zangenbetätigungsrohr (3) sowie einem im Inneren desselben angeordneten gegenüber dem Zentrierrohr (2) in axialer Richtung feststehenden jedoch in Erstreckungsrichtung der zu rekalibrierenden federnden Anlagenoppe (14) pendelnd angeordneten Pendelstange (4) mit am freien Ende derselben angebrachter Greifzange (5) und einer darüber und oberhalb der Sedernden Anlagenoppe (14) mit dem Zangenbetätigungsrohr (3) zur radialen Verschiebung der Greifzange (5) gegen den Druck einer Rückstellfeder (24) in Eingriff bringbaren Anlaufschräge (43) besteht.

2. Richtwerkzeug nach Anspruch 1, dadurch gekennzeichnet, daß die Pendelstange (4) gleichzeitig als Drehpunkt für die Greifzange (5) dient, die auf der einen Seite zum Fassen der Federnden Anlagenoppe Zangenklauen (51, 53) besitzt, die auf der anderen Seite in rückwärtige Zangenfortsätze (52, 54) übergehen.

3. Richtwerkzeug nach Anspruch 1 und 2, dadurch gekennzeichnet, daß das Zangenbetätigungsrohr (3) mit Anlaufflächen (33, 34) versehen ist, die über eine axiale Verschiebung derselben mit den Zangenklauen (51, 53) zum Schließen der Greifzange bzw. mit den Zangenfortsätzen (52, 54) zur Öffnung derselben in Eingriff bringbar sind.

4. Richtwerkzeug nach Anspruch 3, dadurch gekennzeichnet, daß das Zangenbetätigungsrohr (3) mit einer entsprechenden Gewindemutter (31) abgeschlossen ist und mit einer fernbetätigbaren Gewindespindel (22) zur axialen Bewegung desselben in Eingriff steht sowie gegen Verdrehung gesichert ist.

5. Richtwerkzeug nach Anspruch 4, dadurch gekennzeichnet, daß die Gewindespindel (22) durch eine Sperrklinke (62) solange gegen eine Drehung gesichert ist, bis diese durch einen im Zentrierrohr (2) geführten Anschlagstift (61) nach Erreichung der exakten Arbeitslage im Abstandshaltergitter (1) ausgeschwenkt wird.

6. Richtwerkzeug nach Anspruch 5, dadurch gekennzeichnet, daß die Lage der Sperrklinke (62) durch einen Überwachungsschalter (64) optisch oder akustisch zur Bedienungsseite des Werkzeuges gemeldet wird.

7. Richtwerkzeug nach den Ansprüchen 1 bis 6, dadurch gekennzeichnet, daß am oberen Ende desselben eine Kupplung (23) für eine entsprechende Verlängerung mit einem Handrad sowie einem Umdrehungszähler auf ihrer Bedienungsseite angeordnet ist.

8. Richtwerkzeug nach den Ansprüchen 1 bis 7, dadurch gekennzeichnet, daß die Länge des Zentrierrohres (2) mit seinem der Abstandshaltermasche entsprechenden Profil dem Abstand bzw. der Lage der zu erfassenden Abstandshaltergitter (1) angepaßt ist.

**Claims**

1. Resetting tool for the remote-controlled reforming of resilient locating projections (referred to in brief as locating springs) in a square-meshed spacer grid of nuclear reactor fuel elements, characterised in that the tool comprises an outer, centering tube (2), which, allowing for rigid and resilient locating projections protruding into the interior of an opening of the spacer grid, is adapted to the cross-section of the said opening, and which has : a window (21) arranged in the region of the resilient locating projections (14) ; a tube (3) for operating gripping tongs, the tube (3) being concentrically surrounded by the window and displaceable in an axial direction ; and a pivotally mounted bar (4) arranged inside the operating tube (3), which bar is fixed axially with respect to the centering tube (2), is arranged to swing in the direction of extension of the resilient locating projection (14) which is to be reformed, and has gripping tongs (5) mounted at its free end and a protruding inclined surface (43) which may engage the operating tube (3) upwards of the gripping tongs and the resilient locating projection (14), for the purpose of radially shifting the gripping tongs (5) against the action of biasing means (24).

2. Resetting tool according to claim 1, characterised in that the pivotally mounted bar (4) also acts as a rotational centre of the gripping tongs (5) which comprise gripping jaws (51, 53) at one region, for gripping the resilient locating projection, the other region of the gripping means forming rear extensions.

3. Resetting tool according to claims 1 and 2, characterised in that the tong operating tube (3) is provided with protruding regions (33, 34) which when axially displaced may engage the gripping jaws (51, 53) to close the gripping tongs, or the rear extensions (52, 54) to open the gripping tongs.

4. Resetting tool according to claim 3, characterised in that the tong operating tube (3) is closed by way of an appropriate threaded nut (31), engages a remote-controlled threaded spindle (22) for axially moving the spindle and is protected against torsion.

5. Resetting tool according to claim 4, characterised in that the treaded spindle (22) is prevented from turning by means of a catch (62), the catch being pivoted away under the action of a stop pin (61) which is introduced into the centering tube (2) when the exact operating position in the spacer grid (1) has been attained.

6. Resetting tool according to claim 5, characterised in that a monitoring switch (64) transmits to an operating region of the tool an optical or acoustic signal indicative of the position of the catch (62).

7. Resetting tool according to any of claims 1 to 6, characterised in that at the upper end of the tool there is arranged a coupling (23) for an appropriate extension having a hand wheel and a revolution counter on its operating side.

8. Resetting tool according to claims 1 to 7, characterised in that the centering tube has a cross-section corresponding to the opening and a length adapted to the distance or position of the spacer grid (1) which is to be reached.

**Revendications**

1. Outil de redressement pour le recalibrage commandé à distance des tétons élastiques d'appui, désignés en abrégé sous le terme de ressorts d'appui, dans les mailles carrées de la grille d'entretoisement d'éléments combustibles nucléaires, caractérisé par le fait qu'il est constitué par un tube extérieur de centrage (2) qui est adapté à la section transversale d'une maille d'entretoisement, compte tenu des tétons d'appui rigides et élastiques faisant saillie dans l'espace intérieur de cette maille, et qui comporte une fenêtre (21) disposée au voisinage des tétons d'appui élastiques (14), un tube (3) d'actionnement de la pince entouré concentriquement par le tube de centrage et déplaçable suivant la direction axiale, ainsi qu'une barre pendulaire disposée à l'intérieur du tube d'actionnement de la pince et pouvant être fixée suivant la direction axiale par rapport au tube de centrage (2), mais montée oscillante suivant la direction de l'extension du téton d'appui (14) élastique devant être recalibré et comportant sur son extrémité libre une pince (5), et par une rampe oblique (43) pouvant être amenée en prise avec le tube (3) d'actionnement de la pince pour réaliser le déplacement radial de la pince (5) à l'encontre de la pression exercée par un ressort de rappel (24).

2. Outil de redressement suivant la revendication 1, caractérisé par le fait que la barre pendulaire (4) sert simultanément d'axe de rotation pour la pince (5) qui possède, sur un côté, en vue de la détection du téton d'appui élastique, des griffes (51, 53) qui se prolongent, de l'autre côté, par des prolongements arrière de pince (51, 54).

3. Outil de redressement suivant les revendications 1 et 2, caractérisé par le fait que le tube (3) d'actionnement de la pince comporte des surfaces en forme de rampes (33, 34) qui, sous l'effet de leur déplacement axial, peuvent être amenées en prise avec les griffes de pince (51, 53) pour fermer la pince ou peuvent être amenées en prise avec les prolongements de pince (51, 54) pour ouvrir ladite pince.

4. Outil de redressement suivant la revendication 3, caractérisé en ce que le tube (3) d'actionnement de la pince est terminé par un écrou correspondant (31) et est en prise avec une broche filetée (22) pouvant être commandée à distance, en vue de réaliser le déplacement axial, et est bloqué contre toute rotation.

5. Outil de redressement suivant la revendication 4, caractérisé par le fait que ladite broche filetée (21) est bloquée contre toute rotation par un cliquet (62) jusqu'à ce que ce dernier soit basculé par une cheville de butée (61) guidée dans le tube de centrage (2), après avoir atteint la position de travail précise dans la grille d'entretoisement (1).

6. Outil de redressement suivant la revendication 5, caractérisé par le fait que la position du cliquet (62) est signalée par voie optique ou acoustique par un commutateur de contrôle (75), du côté de la commande de l'outil.

7. Outil de redressement suivant les revendications 1 à 6, caractérisé par le fait que sur l'extrémité supérieure de cet outil se trouve disposé un accouplement (23) pour un prolongement correspondant muni d'un volant et d'un compteur du nombre de rotations, sur le côté de commande de cet accouplement.

8. Outil de redressement selon les revendications 1 à 7, caractérisé par le fait que la longueur du tube de centrage (2) est adaptée, par son profil correspondant à la maille d'entretoisement, à la distance ou à la position de la grille d'entretoisement (1) devant être saisie.

FIG 1

FIG 4

FIG 5

FIG 2

FIG 3